# EUROPÄISCHE PATENTSCHRIFT

(11) **EP 0 629 336 B1**
(45) Veröffentlichungstag und Bekanntmachung des Hinweises auf die Patenterteilung: **16.09.1998**
(21) Anmeldenummer: 94108210.9
(22) Anmeldetag: 28.05.1994
(51) Int. Cl.: A01C 5/06, A01C 7/00

(54) **Furchenräumeinrichtung für ein landwirtschaftliches Sägerät**
Furrow clearing device for an agricultural seed drill
Dispositif pour défricher des sillons pour un semoir agricole

(30) Priorität: 16.06.1993 US 79305
(43) Veröffentlichungstag der Anmeldung: 21.12.1994
(73) Patentinhaber: Deere & Company, Moline, Illinois 61265-8098 (US)
(72) Erfinder: Clifton, Kenneth Ralph, Coal Valley, Illinois 61240 (US); Rylander, David James, Victoria, Illinois 61485 (US)
(74) Vertreter: Feldmann, Bernhard

(56) Entgegenhaltungen:
- EP-A- 0 117 745
- US-A- 4 009 668
- US-A- 4 796 550

## Beschreibung

Die Erfindung bezieht sich auf eine Furchenräumeinrichtung für ein landwirtschaftliches Sägerät mit zwei um horizontale Achsen umlaufenden Rollkörpern, die zwischen sich ein Sech aufnehmen und zur Erfassung und Förderung von Gutrückständen seitlich nach außen winklig zueinander angeordnet sind.

Derartige Furchenräumeinrichtungen werden in der Regel bei einem sogenannten Direktsaatverfahren eingesetzt. Diese Verfahren werden immer populärer. Nach einer Ernte werden die Stoppeln nicht mehr untergepflügt oder sonst, wie in den Boden eingebracht und gegebenenfalls mit Häckselgut auf dem Feld belassen. Bei Mais- oder Strohhäcksel beispielsweise ergibt sich eine relativ dicke Restgutschicht, die der Bodenerosion entgegenwirkt, ein Austrocknen des Bodens verhindert und das Entstehen von Unkraut unterdrückt. Für die Landwirte sind aber derartige Verfahren auch deshalb von Vorteil, weil sie einen oder mehrere Arbeitsgänge einsparen. Andererseits werden aber durch diese Verfahren herkömmliche Drillmaschinen oder Einzelkornsämaschinen wesentlich stärker belastet als bisher. Ohne Zusatzeinrichtungen können die Furchenöffner schwerlich eine saubere Furche für die Saatgutablage schaffen. Vielmehr sammeln sich in der Furche Restgutbestände, die den Kontakt des Saatgutes mit dem Erdreich behindern und zu einer schlechten Keimung führen.

Die Furchenräumeinrichtung, von der die Erfindung ausgeht (Prospekt "Move it" der Yetter Manufacturing Co, VStvA mit dem Druckvermerk 1992), weist als Rollkörper zwei relativ schräg gestellte Zinken- oder Sternräder auf, die auch durch Bürstenräder ersetzbar sind. Die entsprechenden Räder sind an einem vertikal verlaufenden Träger angeordnet und je nach Maschinenart in der Höhe so einzustellen, daß die Zinken nicht in den Boden eintreten. Das Sech ist als Scheibensech ausgebildet und soll das Erdreich öffnen oder lockern. Derartige Räder können nicht immer so eingestellt werden, daß sie nur auf dem Boden ablaufen. Entweder greifen sie in den Boden ein, was wegen des Wegschiebens von Erdreich unerwünscht ist, oder sie haben einen Bodenabstand, so daß eine saubere Räumbewegung nicht stattfindet. Damit die relativ schmalen Zinken aber überhaupt räumen können, müssen die Räder sehr schräg gestellt werden, wodurch zu große Streifen geräumt werden (wenn überhaupt) und sich diese Furchenräumer nur bei großen Reihenabständen (ca. 70cm) einsetzen lassen. Lange Restgutbestände lassen sich nicht oder nur unvollkommen aus dem Weg des Furchenöffners forträumen.

Die der Erfindung zugrunde liegende Aufgabe wird deshalb darin gesehen, zumindest einige der vorgenannten Nachteile zu beheben. Es ist daher vorgesehen, daß die Rollkörper als Pressräder mit auf dem Boden abrollender und Gutrückstände festhaltender gleichförmiger Peripherie ausgebildet sind, wobei über die Schneidkante des Sechs von den beiden Pressrädern auseinandergezogene Gutrückstände zerschneidbar sind. Mit derartigen Pressrädern kann ein relativ schmaler Streifen geräumt werden, so daß diese Furchenräumeinrichtung auch bei kleinen Reihenabständen einsetzbar ist. Restgutbestände werden zunächst durch die Pressräder auf den Boden gedrückt, bei Bedarf durch das Sech zertrennt und danach nach außen weggeschoben. Die Ausbildung der Räder verhindert ein Eindringen in den Boden.

Nach der Erfindung sind ferner zwei im betrieblichen Einsatz sich nach vorne erstreckende Anschlußteile vorgesehen, die an ihren frontseitigen Enden je einen Schwenkarm schwenkbar aufnehmen, an dessen freien Ende ein Pressrad drehbar angeordnet ist, wobei ein im betrieblichen Einsatz sich ebenfalls nach vorne erstreckender dritter Anschlußteil an seinem frontseitigen Ende ein Scheibensech drehbar aufnimmt, das an seiner Peripherie mit der Schneidkante versehen ist. Das Scheibensech kann damit bei seinem Abrollen das Restgut zerschneiden. Eine mechanische oder manuelle Höheneinstellung der Pressräder wird damit in einfacher Weise vermieden.

Damit die Pressräder auch immer in der gewünschten Weise mit dem nötigen Druck auf dem Boden abrollen, wird nach der Erfindung außerdem noch vorgeschlagen, daß jeder Schwenkarm unter der Wirkung von zwei voneinander unabhängigen Federn steht. Je nach Gut- und/oder Maschinenbeschaffenheit ist die Federspannung veränderbar, weshalb jede Feder über einen verstellbaren Stellstift spannbar ist, wobei die Schwenkbewegung eines jeden Schwenkarms nach unten durch eine Anschlagplatte begrenzt sein kann. Damit die Federspannung in einfacher Weise verändert werden kann, ist jeder Stellstift in eine von mindestens zwei in dem ersten und zweiten Anschlußteil vorgesehenen Bohrungen einsetzbar und jede Feder weist ein abgewinkeltes Ende auf, das in eine Öffnung in dem zugehörigen Schwenkarm einsetzbar ist, und ein tangentiales Ende, das gegen den zugehörigen Stellstift anliegt, wobei die Federn beiderseits des zugehörigen ersten oder zweiten Anschlußteils vorgesehen sind und auf einem den Schwenkarm mit dem Anschlußteil verbindenden Schwenkzapfen aufsitzen. Damit die Federn identisch ausgebildet sein können, kann noch ein entsprechendes Verlängerungsstück mit der Öffnung im Schwenkarm verbunden sein.

Bei einer Kombination mit einer Sämaschine, die einen Furchenöffner aufweist, sieht die Erfindung schließlich vor, daß die Pressräder mit Bezug auf die Fahrtrichtung vor dem Furchenöffner liegen und mit Bezug auf eine durch den Furchenöffner bestimmte Pflanzlinie V-förmig und beiderseits dieser Pflanzlinie angeordnet sind.

In der Zeichnung ist ein nachfolgend näher erläutertes Ausführungsbeispiel der Erfindung dargestellt. Es zeigt:
- Fig. 1: eine Einzelkornsämaschine mit einer Furchenräumeinrichtung in Seitenansicht,

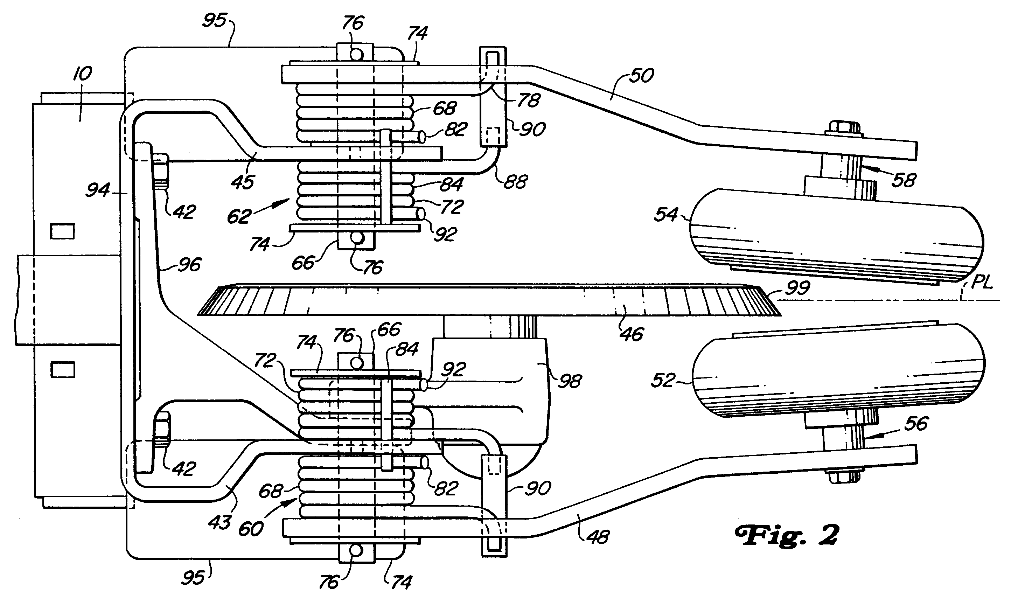

- Fig. 2: die Furchenräumeinrichtung nach Fig. 1 in der Draufsicht und
- Fig. 3: die Pressräder der Furchenräumeinrichtung und ihre Aufhängung in auseinandergezogener Darstellung.

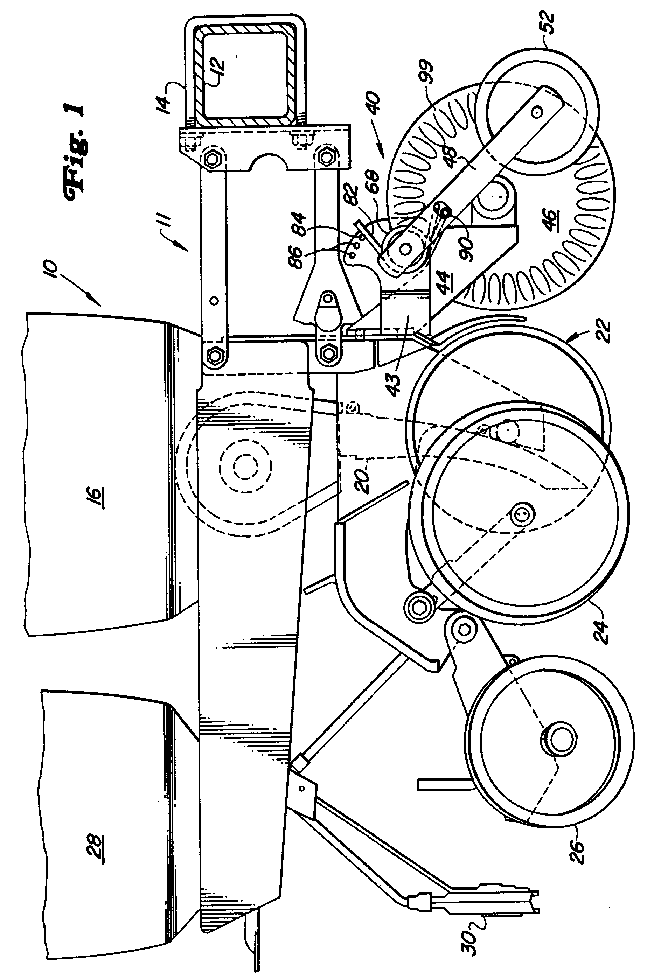

In Fig. 1 der Zeichnung ist eine in der Landwirtschaft einsetzbare Reiheneinheit einer Einzelkornsämaschine 10 dargestellt. Sie ist mit einem Parallelgestänge 11 ausgestattet, das in herkömmlicher Weise an einen Geräteträger 12 über Bügelschrauben 14 angeschlossen ist. Jede Reiheneinheit dieser Einzelkornsämaschine 10 weist einen Vorratsbehälter 16 für Saatgut auf, aus dem das Saatgut in eine Dosiereinrichtung 18 und von dort in dosierter Form in ein Saatrohr 20 zur Ablage in einer Saatfurche gelangt. Die Saatfurche wird durch einen Furchenöffner 22 gezogen und ihre Tiefe wird durch Tasträder 24 bestimmt. Nachdem das aus dem Saatrohr ausgetretene Saatgut in der Saatfurche abgelegt ist, wird die Saatfurche durch Zustreichräder 26 wieder geschlossen. Die in Fig. 1 dargestellte Reiheneinheit der Einzelkornsämaschine 10 ist noch mit einem Vorratsbehälter 28 für Pestizide ausgerüstet, die über eine Austragvorrichtung 30 auf den Boden gelangen. Eine nicht gezeigte Dosiereinrichtung steuert die Menge der auszutragenden Pestizide.

Die insoweit beschriebene Einzelkornsämaschine ist herkömmlicher Bauart. An den Geräteträger 12 sind in der Regel mehrere Reiheneinheiten nebeneinander angeschlossen, wodurch die Arbeitsbreite vergrößert wird und bei einem Durchgang entsprechend viele Saatreihen gelegt werden. Das nachfolgend noch im einzelnen zu beschreibende Ausführungsbeispiel der Erfindung muß nicht unbedingt an einer Einzelkornsämaschine vorgesehen sein. Es kann beispielsweise auch bei ganz gewöhnlichen Drillmaschinen Anwendung finden. Jede Reiheneinheit, sei sie nun an einer Einzelkornsämaschine oder an einer Drillmaschine vorgesehen, definiert eine Pflanzlinie PL, auf der der Furchenöffner läuft und eine Saatfurche zieht, in der das Saatgut abgelegt wird.

Bei der vorbeschriebenen Einzelkornsämaschine ist jede Reiheneinheit mit einer Furchenräumeinrichtung 40 versehen, die über Schrauben 42 an die Frontseite einer jeden Reiheneinheit unmittelbar unterhalb der Anschlußstellen des Parallelgestänges 11 angeschlossen ist. Die Furchenräumeinrichtung 40 weist drei sich nach vorne erstreckende Anschlußteile 43, 44 und 45 zur Aufnahme eines Scheibensechs 46 und von Schwenkarmen 48, 50 für Pressräder 52 und 54 auf. Das Scheibensech 46 ist umlaufend angeordnet, und die Pressräder 52 und 54 sind über Lager 56 und 58 an die Schwenkarme 48 und 50 drehbar angeschlossen.

Jeder Schwenkarm 48 und 50 wird über eine Doppelfedereinrichtung 60, 62 bodenwärts gedrückt und ist an den zugehörigen Anschlußteil 43 bzw. 45 vertikal beweglich angeschlossen. Hierzu ist das obere Ende eines jeden Schwenkarms mit einer Öffnung 64 versehen, durch die sich ein Schwenkzapfen 66 erstreckt. Dieser ist dann weiter durch die Spirale einer ersten Feder 68 der Doppelfedereinrichtung 60 bzw. 62 und durch eine Öffnung 70 in dem Anschlußteil 43 bzw. 45 geführt. Das an der anderen Seite des Anschlußteils 43 bzw. 45 austretende Ende des Schwenkzapfens 66 nimmt die Spirale der zweiten Feder 72 der Doppelfedereinrichtung 60 bzw. 62 auf. Über Scheiben 74 und Splinte 76 an den beiden Enden der Schwenkzapfen 66 erfolgt die Sicherung im eingebauten Zustand.

Das erste oder untere Ende 78 einer jeden ersten Feder 68 ist rechtwinklig abgebogen und erstreckt sich durch ein hochstehend angeordnetes Langloch 80 in jedem Schwenkarm 48, 50. Das zweite oder obere Ende 82 einer jeden ersten Feder 68 erstreckt sich tangential und kommt gegen einen Stellstift 84 zur Anlage, der in eine von drei Öffnungen 86 in den sich nach vorne erstreckenden Anschlußteilen 43 bzw. 45 einsetzbar ist. Durch das Einsetzen des Stellstiftes in die verschiedenen Öffnungen kann die Federwirkung der Doppelfedereinrichtung 60 bzw. 62 und damit der nach unten gerichtete Druck auf die Pressräder 52 und 54 variiert werden.

Mit dem unteren Ende eines jeden Langloches 80 ist noch eine sich nach innen erstreckende Hülse 90 verschweißt, die das erste oder untere und rechtwinklig abgebogene Ende 88 der zweiten Feder 72 der Doppelfedereinrichtung 60 bzw. 62 aufnimmt. Infolge der als Verlängerung ausgebildeten Hülse 90 können die erste und die zweite Feder 68 und 72 identisch ausgebildet werden, so daß unterschiedliche Federn vermieden werden, was aber auch möglich ist, wenn die Hülse fortgelassen wird. Der Stellstift 84 hat eine derartige Länge, daß auch das zweite Ende 92 der zweiten Feder 72 gegen ihn zur Anlage kommen kann.

Die sich nach vorne erstreckenden Anschlußteile 43 und 45 sind die Schenkel eines U-förmigen Tragbügels 94, und an den Unterseiten der beiden Schenkel oder Anschlußteile 43, 45 ist noch je eine Anschlagplatte 95 angeordnet, die die nach unten gerichtete Bewegung der Schwenkarme 48 und 50 begrenzen. Der Anschlußteil 44 ist als Tragteil 96 ausgebildet, der über ein Lagerteil 98 das Scheibensech 46 drehbar aufnimmt. Der Tragbügel 94 und der Tragteil 96 sind über die Schrauben 42 mit der entsprechenden Reiheneinheit verbunden.

Das umlaufende Scheibensech 46 ist an seiner Peripherie mit einer Schneidkante 99 versehen. Das Sech kann aber auch stationär mit einer entsprechenden Schneide ausgebildet sein. In jedem Fall ist aber das Scheibensech oder ein feststehendes Sech so anzuordnen, daß es sich mit einer Schneide zwischen den beiden Pressrädern 52 und 54 derart befindet, daß es von den Pressrädern erfaßtes oder niedergedrücktes Stoppelgut oder dgl. zertrennen kann.

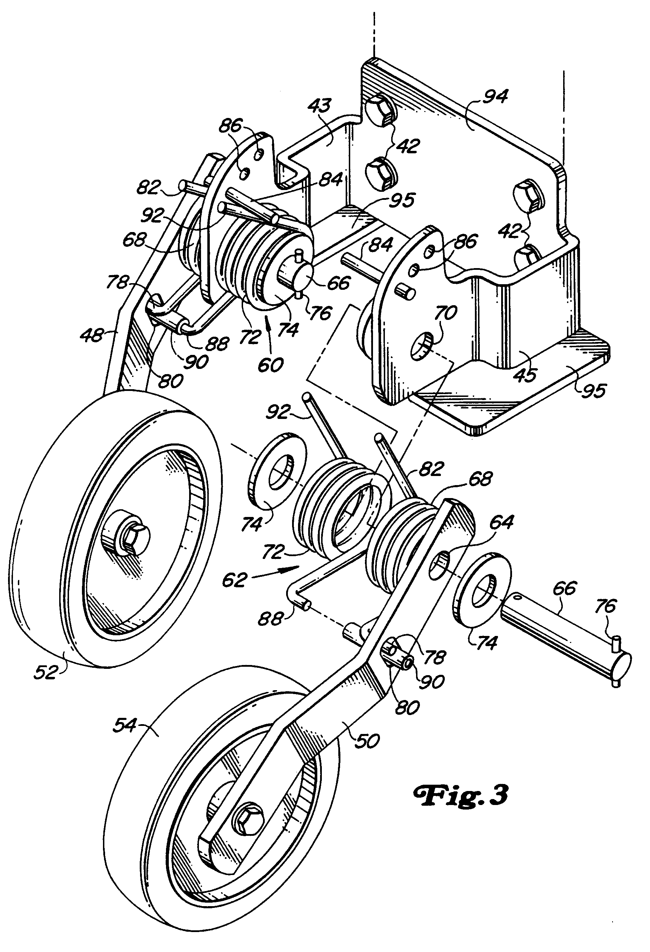

Wie insbesondere aus Fig. 3 zu erkennen ist, sind die Schwenkarme 48, 50, die Lager 56, 58 und die Pressräder 52, 54 derart angeordnet, daß sich auf dem Feld noch befindliches Stoppelgut oder dgl. zunächst erfaßt und festgehalten bzw. nach unten gedrückt wird und danach nach außen von der Pflanzlinie fort bewegt wird. Die Pressräder 54, 58 sind V- oder keilförmig angeordnet und ein imaginärer Schnittpunkt würde vor den Pressrädern auf der Pflanzlinie PL liegen.

Im Einsatz wird die Einzelkornsämaschine nach vorne bewegt, und die Pressräder laufen infolge ihres Kontaktes mit dem Boden um. Wie aus Fig. 1 zu ersehen ist, liegt die Bodenkontaktfläche der Pressräder höher als die untere Peripherie des Scheibensechs, damit von beiden Pressrädern erfaßtes Stoppelgut zertrennt werden kann. Normalerweise schieben die Pressräder infolge ihrer V-förmigen Anordnung im Bereich der Pflanzlinie befindliches Restgut nach außen. Restgut, das von beiden Pressrädern erfaßt wird, wird wegen der keilförmigen Anordnung, die das Wegschieben von der Pflanzlinie bewirkt, gespannt, so daß es von der nachfolgenden Schneidkante leicht zertrennt und dann noch nach außen geschoben werden kann. Die Pflanzlinie, auf der die Saatfurche nachfolgend gezogen wird, ist damit von Restgut befreit. Restgut oder Teilrestgut befindet sich insbesondere dann auf einem einzusäenden Feld, wenn es vorher nicht kultiviert, insbesondere gepflügt oder mit einem Kultivator oder einer Scheibenegge bearbeitet wurde.

## Patentansprüche

1. Furchenräumeinrichtung für ein landwirtschaftliches Sägerät mit zwei um horizontale Achsen umlaufenden Rollkörpern, die zwischen sich ein Sech (46) aufnehmen und zur Erfassung und Förderung von Gutrückständen seitlich nach außen winklig zueinander angeordnet sind, dadurch gekennzeichnet, daß die Rollkörper als Pressräder (52, 54) mit auf dem Boden abrollender und Gutrückstände festhaltender gleichförmiger Peripherie ausgebildet sind, wobei über die Schneidkante (99) des Sechs (46) von den beiden Pressrädern (52, 54) auseinandergezogene Gutrückstände zerschneidbar sind.

2. Einrichtung nach Anspruch 1, gekennzeichnet durch zwei im betrieblichen Einsatz sich nach vorne erstreckende Anschlußteile (43, 45), die an ihren frontseitigen Enden je einen Schwenkarm (48, 50) schwenkbar aufnehmen, an dessen freien Ende ein Pressrad (52, 54) drehbar angeordnet ist.

3. Einrichtung nach Anspruch 2, gekennzeichnet durch einen im betrieblichen Einsatz sich nach vorne erstreckenden dritten Anschlußteil (44), der an seinem frontseitigen Ende ein Scheibensech (46) drehbar aufnimmt, das an seiner Peripherie mit der Schneidkante (99) versehen ist.

4. Einrichtung nach Anspruch 2, dadurch gekennzeichnet, daß jeder Schwenkarm (48, 50) unter der Wirkung von zwei voneinander unabhängigen Federn (68, 72) steht.

5. Einrichtung nach Anspruch 4, dadurch gekennzeichnet, daß jede Feder (68, 72) über einen verstellbaren Stellstift (84) spannbar ist.

6. Einrichtung nach einem oder mehreren der vorherigen Ansprüche, dadurch gekennzeichnet, daß die Schwenkbewegung eines jeden Schwenkarms (48, 50) durch eine Anschlagplatte (95) begrenzbar ist.

7. Einrichtung nach Anspruch 5, dadurch gekennzeichnet, daß jeder Stellstift (84) in eine von mindestens zwei in dem ersten und zweiten Anschlußteil (43, 45) vorgesehenen Bohrungen (86) einsetzbar ist.

8. Einrichtung nach einem oder mehreren der vorherigen Ansprüche, dadurch gekennzeichnet, daß jede Feder (68, 72) ein abgewinkeltes Ende (78, 88), das in eine Öffnung (80) in dem zugehörigen Schwenkarm (48, 50) einsetzbar ist, und ein tangentiales Ende (82, 92) aufweist, das gegen den zugehörigen Stellstift (84) anliegt, wobei die Federn (68, 72) beiderseits des zugehörigen ersten oder zweiten Anschlußteils (43, 45) vorgesehen sind und auf einem den Schwenkarm (48, 50) mit dem Anschlußteil (43, 45) verbindenden Schwenkzapfen (66) aufsitzen.

9. Einrichtung nach einem oder mehreren der vorherigen Ansprüche in Kombination mit einer Sämaschine, die einen Furchenöffner (22) aufweist, dadurch gekennzeichnet, daß die Pressräder (52, 54) mit Bezug auf die Fahrtrichtung vor dem Furchenöffner (22) liegen und mit Bezug auf eine durch den Furchenöffner (22) bestimmte Pflanzlinie (PL) V-förmig und beiderseits dieser Pflanzlinie angeordnet sind.

## Claims

1. A furrow cleaning device for an agricultural seed drill with two rolling bodies rotating about horizontal axles which receive a coulter (46) therebetween and are inclined relative to one another for engaging and moving crop residues laterally to the outside, characterized in that the rolling bodies are in the form of press wheels (52, 54) with uniform peripheries rolling on the ground and holding crop residues fast, wherein crop residues pulled apart by the two press wheels (52, 54) can be cut by the cutting edge (99) of the coulter (46).

2. A device according to claim 1, characterized by two connecting parts (43, 45) extending forwards in operational use, each of which pivotally receives a pivoted arm (48, 50) at its front end, on the free end of which arm a press wheel (52, 54) is rotatably mounted.

3. A device according to claim 2, characterized by a third connecting part (44) extending forwards in operational use, which receives a disc coulter (46) rotatably at its front end, the coulter being provided with a cutting edge (99) at its periphery.

4. A device according to claim 2, characterized in that each pivoted arm (48, 50) is subject to the action of two springs (68, 72) independent of one another.

5. A device according to claim 4, characterized in that each spring (68, 72) can be tensioned by an adjustable positioning rod (84).

6. A device according to one or more of the preceding claims, characterized in that the pivotal movement of each pivoted arm (48, 50) can be limited by a stop plate (95).

7. A device according to claim 5, characterized in that each positioning rod (84) can be fitted in one of at least two bores (86) provided in the first and second connecting parts (43, 45).

8. A device according to one or more of the preceding claims, characterized in that each spring (68, 72) comprises a bent end (78, 88) which can be fitted in an opening (80) in the corresponding pivoted arm (48, 50), and a tangential end (82, 92) which bears against the corresponding positioning rod (84), wherein the springs (68, 72) are provided on the two sides of the corresponding first or second connecting part (43, 45) and fit on a pivot pin (66) connecting the pivoted arm (48, 50) to the connecting part (43, 45).

9. A device according to one or more of the preceding claims in combination with a seed drill which comprises a furrow opener (22), characterized in that the press wheels (52, 54) lie ahead of the furrow opener (22) in relation to the direction of travel and in relation to a planting line (PL) determined by the furrow opener (22) are arranged in V formation on the two sides of this planting line.

## Revendications

1. Dispositif pour former des sillons pour un semoir agricole comportant deux corps roulants, qui tournent autour d'axes horizontaux et logent entre eux un coutre (46) et sont disposés en étant inclinés l'un par rapport à l'autre notamment vers l'extérieur pour saisir et entraîner des résidus de matière, caractérisé en ce que les corps roulants sont agencés sous la forme de roues de pressage (52, 54) qui possèdent une périphérie uniforme, qui roule sur le sol et maintient fermement des résidus de matière, des résidus de matière retirés par les deux roues de pressage (52, 54) pouvant être fragmentés au moyen de l'arête de coupe (99) du coutre (46).

2. Dispositif selon la revendication 1, caractérisé par deux éléments de raccordement (43, 45), qui en cours de fonctionnement s'étendent vers l'avant et logent, au niveau de leurs extrémités frontales, des bras pivotants respectifs (48, 50) de manière qu'ils puissent pivoter, une roue de pressage (52, 54) étant montée de manière à pouvoir tourner sur l'extrémité libre de ces bras.

3. Dispositif selon la revendication 2, caractérisé par un troisième élément de raccordement (44), qui s'étend vers l'avant en cours de fonctionnement et reçoit, sur son extrémité avant, un coutre en forme de disque (46), de manière qu'il puisse tourner, ce coutre comportant l'arête de coupe (99) sur sa périphérie.

4. Dispositif selon la revendication 2, caractérisé en ce que chaque bras pivotant (48, 50) est soumis à l'action de deux ressorts (68, 72), indépendants l'un de l'autre.

5. Dispositif selon la revendication 4, caractérisé en ce que chaque ressort (68, 72) peut être bandé au moyen d'une tige de réglage réglable (84).

6. Dispositif selon l'une ou plusieurs des revendications précédentes, caractérisé en ce que le mouvement de pivotement de chaque bras pivotant (48, 50) peut être limité par une plaque de butée (95).

7. Dispositif selon la revendication 5, caractérisé en ce que chaque tige de réglage (84) peut être insérée dans l'un d'au moins deux perçages (86) prévus dans les premier et second éléments de raccordement (43, 45).

8. Dispositif selon une ou plusieurs des revendications précédentes, caractérisé en ce que chaque ressort (68, 72) possède une extrémité coudée (78, 88), qui peut être insérée dans une ouverture (80) formée dans le bras pivotant associé (48, 50), et possède une extrémité tangentielle (82, 92) qui s'applique contre la tige de réglage associée (84), les ressorts (68, 72) étant prévus des deux côtés du premier ou du second élément de raccordement associé (43, 45) et prenant appui sur un tourillon (66) reliant le bras pivotant (48, 50) à l'élément de raccordement (43, 45).

9. Dispositif selon l'une ou plusieurs des revendications précédentes, en combinaison avec un semoir, qui comporte un soc de semoir (22), caractérisé en ce que les roues de pressage (52, 54) sont situées en avant du soc de semoir (22) dans la direction de déplacement et sont disposées en forme de V par rapport à la ligne de plantation (PL) déterminée par le soc de semoir (22), et des deux côtés de cette ligne de plantation.
